(19) Europäisches Patentamt
European Patent Office
Office européen des brevets

(11) **EP 2 627 114 A1**

(12) **EUROPEAN PATENT APPLICATION**
published in accordance with Art. 153(4) EPC

(43) Date of publication:
**14.08.2013 Bulletin 2013/33**

(51) Int Cl.:
***H04W 16/26*** (2009.01)     ***H04B 7/15*** (2006.01)
***H04W 72/04*** (2009.01)

(21) Application number: **11830622.4**

(22) Date of filing: **03.10.2011**

(86) International application number:
**PCT/JP2011/072758**

(87) International publication number:
**WO 2012/046690 (12.04.2012 Gazette 2012/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2010 JP 2010225181**

(71) Applicant: **NTT DOCOMO, INC.**
**Chiyoda-ku**
**Tokyo**
**100-6150 (JP)**

(72) Inventors:
• **NAGATA, Satoshi**
**Tokyo 100-6150 (JP)**

• **YAN, Yuan**
**Tokyo 100-6150 (JP)**
• **LI, Anxin**
**Tokyo 100-6150 (JP)**
• **GAO, Xinying**
**Tokyo 100-6150 (JP)**

(74) Representative: **HOFFMANN EITLE**
**Patent- und Rechtsanwälte**
**Arabellastrasse 4**
**81925 München (DE)**

(54) **RELAY TRANSMISSION METHOD AND RELAY STATION**

(57)     To prevent throughput of a macro terminal connecting to a radio base station from deteriorating due to an interference signal from a relay station provided in a cell of the radio base station in a radio communication system using relay transmission techniques, a relay transmission method of the invention has a step in which a relay station receives data to a relay terminal from a radio base station via a backhaul link, a step in which the relay station allocates a radio resource to the relay terminal to a certain frequency region over a plurality of TTIs, and a step in which the relay station transmits the data to the relay terminal via an access link using the allocated radio resource.

FIG. 5A

FIG. 5B

**Description**

Technical field

The present invention relates to a relay transmission method and relay station in a radio communication system using relay transmission techniques.

Background art

In the 3GPP (3rd Generation Partnership Project), standardization of LTE-Advanced (LTE-A) has proceeded, as the 4G mobile communication system to actualize communications of higher speed and larger capacity than LTE (Long Term Evolution) that is evolved specifications of the 3G mobile communication system. In addition to actualization of high-speed large-capacity communications, in LTE-A, improvements in throughput in cell-edge users are an important issue, and as one means, studied are relay transmission techniques in which a relay station relays radio transmission between a radio base station and a mobile terminal. By using the relay transmission techniques, it is expected to efficiently increase coverage.

In the relay transmission techniques, there are a layer 1 relay, layer 2 relay and layer 3 relay. The layer 1 relay is also called the booster or repeater, and is the AF (Amplifier and Forward) type relay technique for amplifying power of a downlink reception RF signal from a radio base station to transmit to a mobile terminal. An uplink reception RF signal from the mobile terminal also undergoes power amplification similarly and is transmitted to the radio base station. The layer 2 relay is the DF (Decode and Forward) type relay technique for demodulating and decoding a downlink reception RF signal from a radio base station, then performing coding and demodulation again, and transmitting the signal to a mobile terminal. The layer 3 relay is a relay technique for decoding a downlink reception RF signal from a radio base station, then reproducing user data, in addition to demodulation and decoding processing, performing processing (concealment, user data segmentation and concatenation processing, etc.) to perform radio user data transmission again, further performing coding and demodulation, and then, transmitting to a mobile terminal. Currently, in the 3GPP, standardization of the layer 3 relay has proceeded, from the viewpoints of improvements in reception characteristics due to noise cancellation and easiness in standard specification study and implementation.

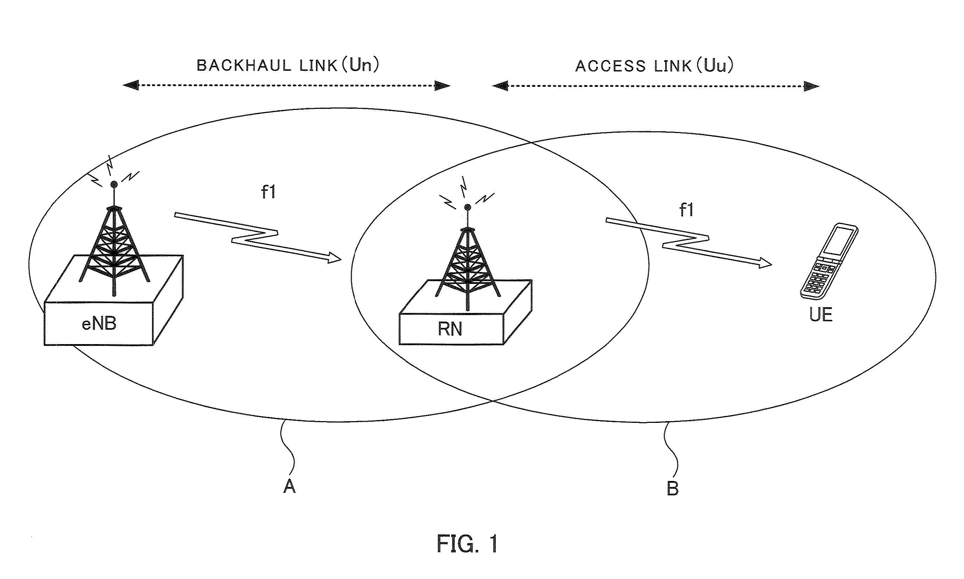

FIG. 1 is a diagram illustrating the outline of the layer 3 relay. A relay station (RN: Relay Node) of the layer 3 relay is characterized by having a specific cell ID (PCI: Physical Cell ID) different from that of a radio base station (eNB: eNode B) in addition to performing user data reproduction processing, modulation/demodulation and coding/decoding processing. By this means, a mobile terminal (UE: User Equipment) identifies a cell B formed by the relay station RN as a cell different from a cell A formed by the radio base station. Further, since control signals of physical layers such as a CQI (Channel Quality Indicator) and HARQ (Hybrid Automatic Repeat reQuest) are terminated in the relay station, the mobile terminal regards the relay station as a radio base station. Accordingly, mobile terminals only having LTE functions are also capable of connecting to the relay station.

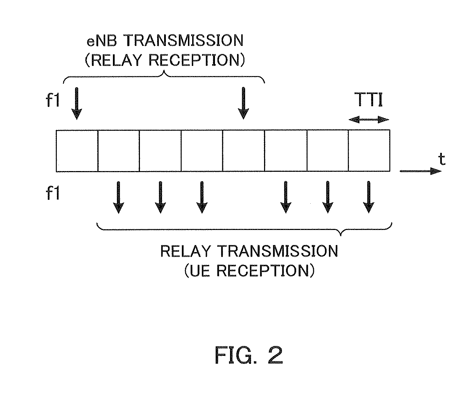

Further, it is considered that different frequencies or the same frequency is used to operate the backhaul link that is a radio link between the radio base station and the relay station, and the access link that is a radio link between the relay station and the mobile terminal, and in the latter case, when the relay station performs transmission and reception processing at the same, unless sufficient isolation can be secured in the transmission and reception circuits, a transmission signal enters a receiver of the relay station and causes interference. Therefore, as shown in FIG. 2, when the same frequency (f1) is used to operate, it is necessary to perform Time Division Multiplexing (TDM) on radio resources of the backhaul link and access link (eNB transmission and relay transmission) to control so that transmission and reception is not performed at the same time in the relay station (Non-patent Document 1). Therefore, for example, in downlink, the relay station is not capable of transmitting a downlink signal to a mobile terminal for a period during which a downlink signal is received from the radio base station.

Citation list

Non-patent literature

    [Non-patent literature 1] 3GPP, TR36.814

Summary of the invention

Technical problem

In the radio communication system using the relay transmission techniques as described above, there is the problem that throughput of a mobile terminal connecting to a radio base station deteriorates due to an interference signal from a relay station provided in a cell of the radio base station.

The present invention was made in view of such a respect, and it is an object of the invention to provide a relay transmission method and relay station for enabling throughput of a mobile terminal connecting to a radio base station to be prevented from deteriorating due to an interference signal from a relay station provided in a cell of the radio base station in a radio communication system using relay transmission techniques.

Solution to problem

A relay transmission method according to a first aspect of the invention has a step in which a relay station receives data to a relay terminal from a radio base station via a backhaul link, a step in which the relay station allocates a radio resource to the relay terminal to a certain frequency region over a plurality of transmission time intervals, and a step in which the relay station transmits the data to the relay terminal via an access link using the allocated radio resource.

A relay station according to a second aspect of the invention has a storage section configured to store data to a relay terminal received from a radio base station via a backhaul link, an allocation section configured to allocate a radio resource to the relay terminal to a certain frequency region over a plurality of transmission time intervals, and a transmission section configured to transmit the data to the relay terminal via an access link using the allocated radio resource.

Advantageous Effects of Invention

According to the invention, it is possible to provide a relay transmission method and relay station for enabling throughput of a mobile terminal connecting to a radio base station to be prevented from deteriorating due to an interference signal from a relay station provided in a cell of the radio base station in the radio communication system using relay transmission techniques.

Brief Description of Drawings

FIG. 1 is a diagram to explain relay transmission techniques;
FIG. 2 is a diagram to explain radio resources of backhaul link and access link;
FIG. 3 is a diagram to explain a radio communication system using relay transmission techniques;
FIG. 4 contains diagrams illustrating the relationship between transmission/non-transmission state of a relay station and ICI in a macro terminal;
FIG. 5 contains conceptual diagrams to explain a relay transmission method according to the invention;
FIG. 6 contains conceptual diagrams to explain the relay transmission method according to the invention;
FIG. 7 is a diagram to explain a relay transmission method according to a first aspect of the invention;
FIG. 8 is another diagram to explain the relay transmission method according to the first aspect of the invention;
FIG. 9 is a diagram to explain a relay transmission method according to a second aspect of the invention;
FIG. 10 is a diagram to explain a relay transmission method according to a third aspect of the invention; and
FIG. 11 is a block diagram illustrating a functional configuration of a relay station according to one Embodiment of the invention.

Description of embodiments

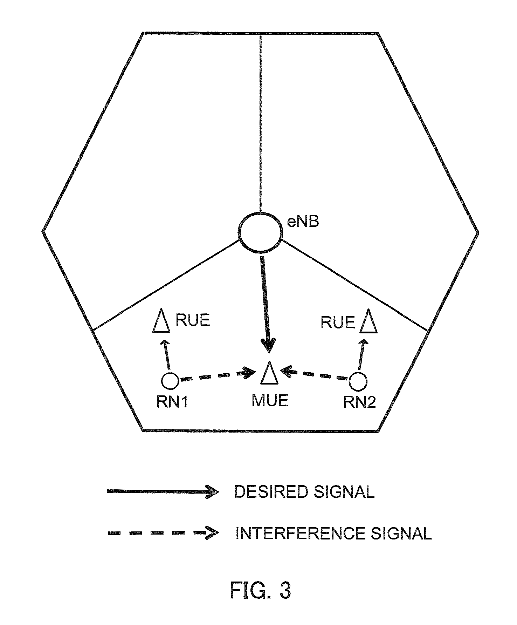

FIG. 3 is a diagram to explain a radio communication system using relay transmission techniques. In the radio communication system as shown in FIG. 3, relay stations RN (Relay Node) 1 and RN 2 are provided in a cell formed by a radio base station eNB (eNode B). Each of the relay stations RN 1 and RN 2 receives a signal to a mobile terminal RUE (Relay User Equipment) (hereinafter, referred to as a relay terminal RUE) connecting to the relay station from the radio base station eNB via a backhaul link (not shown). Each of the relay stations RN 1 and RN 2 transmits the signal to the relay terminal RUE via an access link. Further, the radio base station eNB transmits a signal to a mobile terminal MUE (Macro User Equipment) (hereinafter, referred to as a macro terminal MUE) to the macro terminal MUE connecting to the base station.

In the radio communication system as shown in FIG. 3, the macro terminal MUE receives not only a desired signal from the radio base station eNB but also interference signals from the relay stations RN 1 and RN 2. It is referred to as Inter-Cell Interference (ICI) that the macro terminal MUE thus receives interference signals from the relay stations RN 1 and RN 2. The effect of ICI in the macro terminal MUE is larger, as the macro terminal MUE is in a position closer to the relay station RN 1 or RN 2.

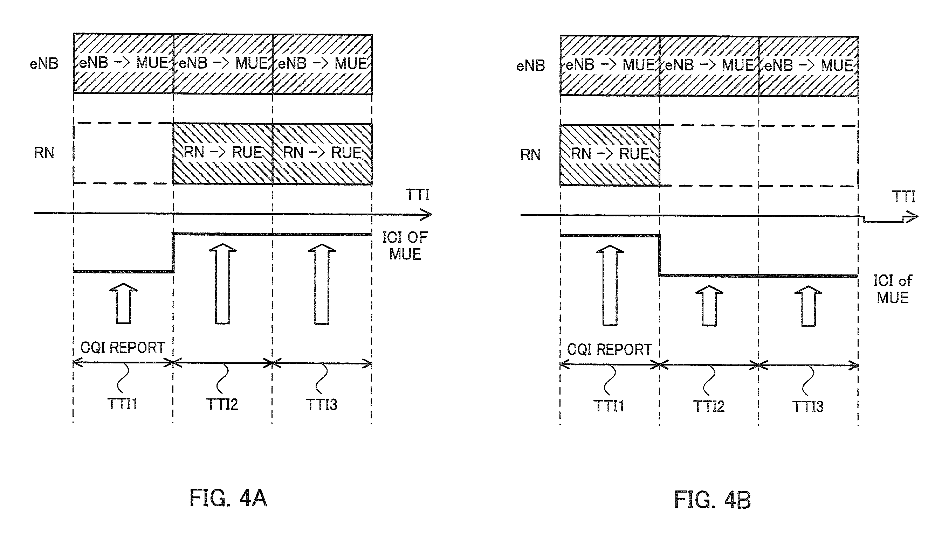

FIG.4 contains diagrams illustrating the relationship between transmission/non-transmission state of the relay station and ICI in the macro terminal. In addition, hereinafter, when the relay stations RN 1 and RN 2 are not distinguished, the relay stations are collectively called the relay station RN. As shown in FIGs. 4A and 4B, the effect of ICI in the macro terminal MUE is small at a transmission time interval (TTI) during which the relay station RN does not transmit a signal to the relay terminal RUE. Meanwhile, the effect of ICI in the macro terminal MUE is large at a TTI during which the relay station RN transmits a signal to the relay terminal RUE.

Herein, at a TTI 1 of FIG. 4A, it is assumed that the macro terminal MUE measures radio quality (for example, CQI (Channel Quality Indicator), etc.) of the signal from the radio base station eNB. As shown in FIG. 4A, at the TTI 1, since the effect of ICI in the macro terminal MUE is small, the macro terminal MUE reports relatively good radio quality to the radio base station eNB. Based on the report, the radio base station eNB transmits a signal to the macro terminal MUE, using a modulation and coding scheme (MCS) of a higher level such as QAM (Quadrature Amplitude Modulation). However, at TTI 2 and TTI 3, the effect of ICI in the macro terminal MUE is large, and therefore, the macro terminal MUE is not capable of correctly receiving the signal transmitted using the MCS of a high level. As a result, the number of retransmissions from the radio base station eNB to the macro terminal MUE increases, and throughput of the macro terminal MUE deteriorates.

Meanwhile, at a TTI 1 of FIG. 4B, it is assumed that the macro terminal MUE measures radio quality (for example, CQI) of the signal from the radio base station eNB. As shown in FIG. 4B, at the TTI 1, since the effect of ICI in the macro terminal MUE is large, the macro terminal MUE reports relatively poor radio quality to the radio base station eNB. Based on the report, the radio base station eNB transmits a signal to the macro terminal MUE, using an MCS of a lower level such as PSK (Phase Shift Keying). However, at TTI 2 and TTI 3, the effect of ICI in the macro terminal MUE is small and therefore, although the macro terminal MUE is capable of receiving a larger amount of data, the macro terminal MUE is allowed to receive only a small amount of data. As a result, throughput of the macro terminal MUE deteriorates.

The inventors of the present invention focused on the respect that throughput of the macro terminal MUE deteriorates due to a time error of the radio quality of the macro terminal MUE when ICI in the macro terminal MUE largely varies according to the transmission/non-transmission state of the relay station RN, as described above, and arrived at the invention.

In a relay transmission method according to the invention, a relay station RN receives data to a relay terminal RUE from a radio base station eNB via a backhaul link. The relay station RN allocates radio resources to the relay terminal RUE to a certain frequency region over a plurality of transmission time intervals (TTIs). The relay station RN transmits the received data to the relay terminal RUE via an access link using the allocated radio resources.

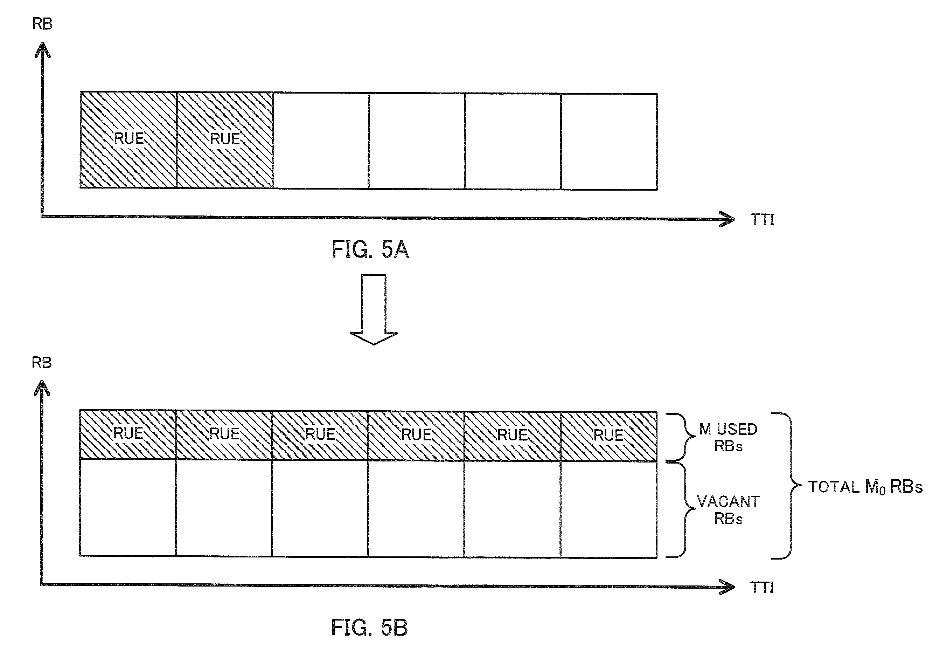

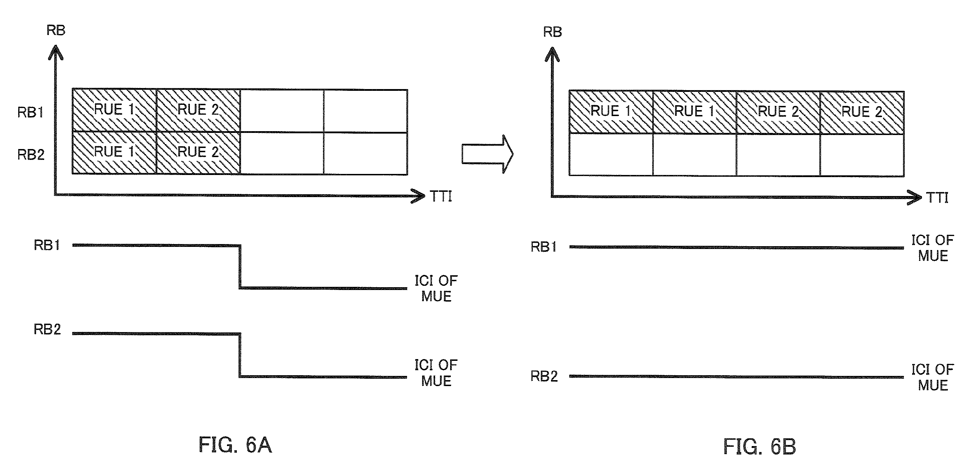

FIGs. 5 and 6 contain conceptual diagrams to explain the relay transmission method according to the invention. In the relay transmission method as shown in FIG. 5A, in the relay station RN, radio resources to the relay terminal RUE are allocated to only particular TTIs among 6 TTIs allowed to transmit data to the relay terminal RUE. In such a case, as shown in FIG. 6A, ICI in the macro terminal MUE largely varies according to the transmission/non-transmission state of the relay station RN. Therefore, as described above, throughput of the macro terminal MUE deteriorates due to a time error of the radio quality of the macro terminal MUE.

Meanwhile, in the relay transmission method according to the invention, as shown in FIG. 5B, radio resources to the relay terminal RUE are allocated to a certain frequency region over all 6 TTIs allowed to transmit data to the relay terminal RUE. In such a case, as shown in FIG. 6B, since the transmission state of the relay station RN is maintained, ICI in the macro terminal MUE is approximately constant. Therefore, according to the relay transmission method according to the invention, a time error of the radio quality is eliminated in the macro terminal MUE, and it is possible to prevent throughput of the macro terminal MUE from deteriorating.

Aspects of the relay transmission method according to the invention will be described below.

<First aspect>

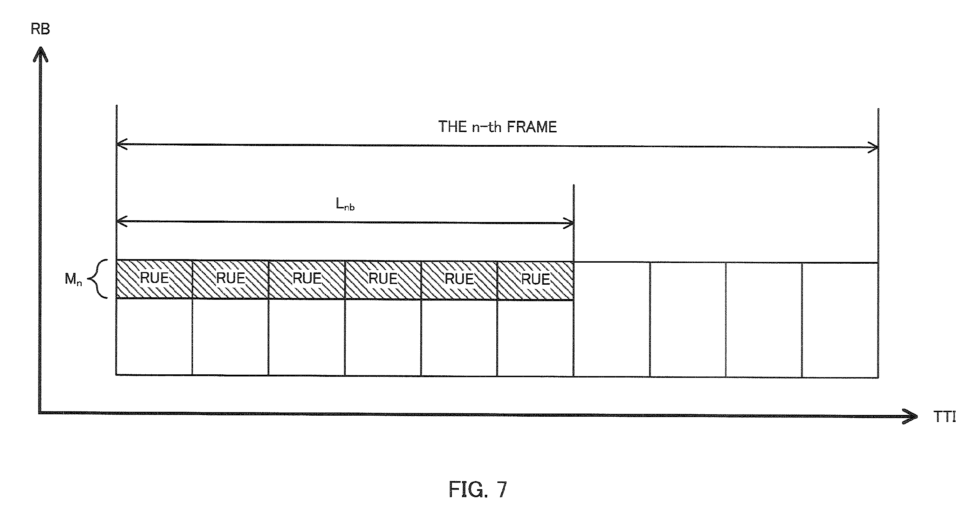

FIG. 7 is a diagram to explain the relay transmission method according to the first aspect of the invention. In the relay transmission method according to the first aspect, at least one resource block constitutes a certain frequency region over a plurality of TTIs to which are allocated radio resources to the relay terminal RUE. Herein, the resource block is a minimum unit of radio resource allocation, and has a time duration of 1 TTI with a frequency bandwidth of 12 subcarriers=180 Khz.

More specifically, as shown in FIG. 7, the certain frequency region over a plurality of TTIs is comprised of $M_n \cdot L_{nb}$ resource blocks. Herein, $L_{nb}$ is the number of TTIs (i.e. the number of non-backhaul subframes) for enabling the relay station RN to transmit data to the relay terminal RUE in one radio frame. In FIG. 7, the number of $L_{nb}$ is "6". In remaining 4 TTIs, since data is received from the radio base station eNB, the relay station RN is not capable of transmitting the data to the relay terminal RUE.

Further, $M_n$ is the number of resource blocks in the frequency domain constituting the certain frequency region over a plurality of TTIs in an nth radio frame. $M_n$ may be a beforehand defined fixed value, or may be calculated at the beginning of the nth radio frame. For example, $M_n$ is calculated by following equation (1).
[Eq.1]

$$M_n = (1+p)\sum_{k=1}^{K} \frac{T_k}{SE_k \cdot L_{nb}} \qquad \text{Equation (1)}$$

Herein, K represents the number of relay terminals connecting to the relay station RN, $T_K$ represents a data amount to a Kth relay terminal RUE, $SE_K$ represents a data amount that the relay station RN is capable of transmitting to the Kth relay terminal RUE with one resource block, $L_{nb}$ represents the number of TTIs for enabling the relay station RN to transmit data to the relay terminal RUE in one radio frame as described above, and p represents a predetermined coefficient. In addition, the predetermined coefficient p is a coefficient to increase the number of $M_n$, and is varied to a higher value, for example, when a relay terminal RUE requesting a large amount of data is connected to the relay station RN or when the number of retransmissions to a relay terminal RUE increases.

For example, in the case that a data amount $T_K$ to the Kth relay terminal RUE is 100 kbp, and that a data amount $SE_K$ capable of being transmitted to the relay terminal RUE with one resource block is 10 kbps, the number $T_k/SE_K$ of resource blocks required for the relay terminal RUE is "10". In above-mentioned equation (1), by dividing the number of resource blocks required for each relay terminal RUE by $L_{nb}$ ("6" in FIG. 7) to add, the number $M_n$ of resource blocks in the frequency domain is calculated.

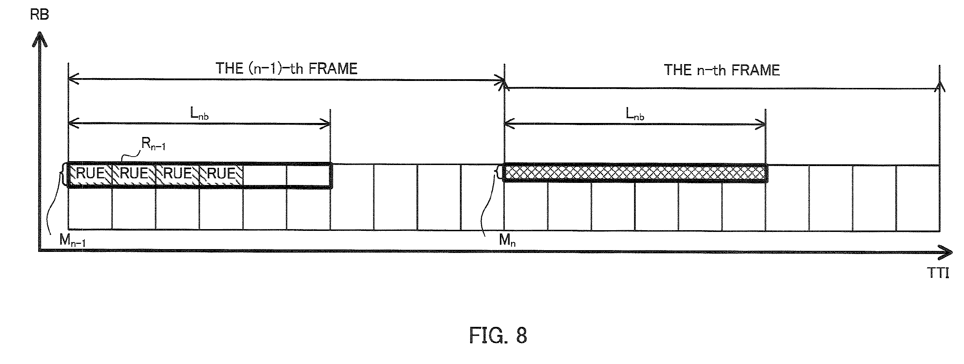

Further, in the relay transmission method according to the first aspect, $M_n$ may be updated based on the number of resource blocks that are actually used in the previous radio frame. FIG. 8 is a diagram to explain update of $M_n$ in the relay transmission method according to the first aspect. In FIG. 8, $M_n$ applied to the nth radio frame is updated based on $R_{n-1}$. Herein, $R_{n-1}$ is the number of resource blocks that are actually used in transmission of data to the relay terminal RUE in the n-1th radio frame among $M_{n-1} \cdot L_{nb}$ resource blocks assigned to the relay terminal RUE.

More specifically, $M_n$ is updated based on following equation (2).
[Eq.2]

$$\Delta_{n-1} = M_{n-1} \cdot L_{nb} - R_{n-1} \qquad \text{Equation (2)}$$

Herein, in the case of $\Delta_{n-1}=0$, it is meant that all $M_{n-1} \cdot L_{nb}$ resource blocks assigned to the relay terminal RUE are actually used. Therefore, it is preferable that $M_n$ is set at a higher value, and that more resource blocks are assigned to the relay terminal RUE in the nth radio frame. Hence, in the case of $\Delta_{n-1}=0$, the relay station RN increases the predetermined coefficient p in above-mentioned equation (1) by the predetermined number to set $M_n$ at a higher value.

Meanwhile, when following equation (3) is met,
[Eq.3]

$$\Delta_{n-1} \geq \alpha \cdot L_{nb} \qquad \text{Equation (3)}$$

it is meant that the number of resource blocks that is approximately higher than $\alpha \cdot L_{nb}$ is not used among $M_{n-1} \cdot L_{nb}$ resource blocks assigned to the relay terminal RUE. In such a case, it is preferable that $M_n$ is set at a lower value to decrease the number of resource blocks assigned to the relay terminal RUE in the nth radio frame. Hence, when above-mentioned equation (3) is met, the relay station RN sets $M_n$ at a lower value by following equation (4).
[Eq.4]

$$M_n = M_n - 1 \qquad \text{Equation (4)}$$

In addition, $\alpha$ in above-mentioned equation (3) is a predetermined coefficient that meets following equation (5), and is set with a calculation error of $M_n$ by estimating above-mentioned equation (1).
[Eq.5]

$$\alpha \geq 1 \qquad \text{Equation (5)}$$

For example, in FIG. 8, the case is assumed that "4" is the number $M_{n-1}$ of resource blocks in the frequency domain in the n-1th radio frame, and that $L_{nb}$ is "6". In such a case, the number $M_{n-1} \cdot L_{nb}$ of resource blocks assigned to the relay terminal RUE in the n-1th radio frame is 4·6=24. Further, in the case as shown in FIG. 8, since $R_{n-1}$ is 4·4=16, $\Delta_{n-1}$ is 24-16=8 by above-mentioned equation (2). Herein, when the predetermined coefficient p is assumed to be "1.1", above-mentioned equation (3) (i.e. 8>1.1·6) is met. Therefore, the relay station RN sets $M_n$ at 4-1=3 by above-mentioned equation (4). As a result, the number of resource blocks assigned to the relay terminal RUE in the nth radio frame is 3·6=18, and is lower than the number (24) in the n-1th radio frame. Thus, since $M_n$ is updated based on the number of resource blocks that are actually used in the previous radio frame, it is possible to use radio resource more effectively.
In addition, although not shown, in the case that $M_{n-1}$ is "4" and that $L_{nb}$ is "6" as described above, it holds that $\Delta_{n-1}$=4·6-24=0 when $R_{n-1}$ is "24". In such a case, by increasing the predetermined coefficient p in above-mentioned equation (1) by the predetermined number to set $M_n$ at a higher value, the number of resource blocks assigned to the relay terminal RUE in the nth radio frame is set at a value higher than in the n-1th radio frame.

<Second aspect>

In a relay transmission method according to the second aspect, when radio resources to a relay terminal RUE are allocated to a certain frequency region over a plurality of TTIs as described above, the radio resources over a plurality of TTIs may be allocated to a contiguous frequency region starting from a predetermined start position.

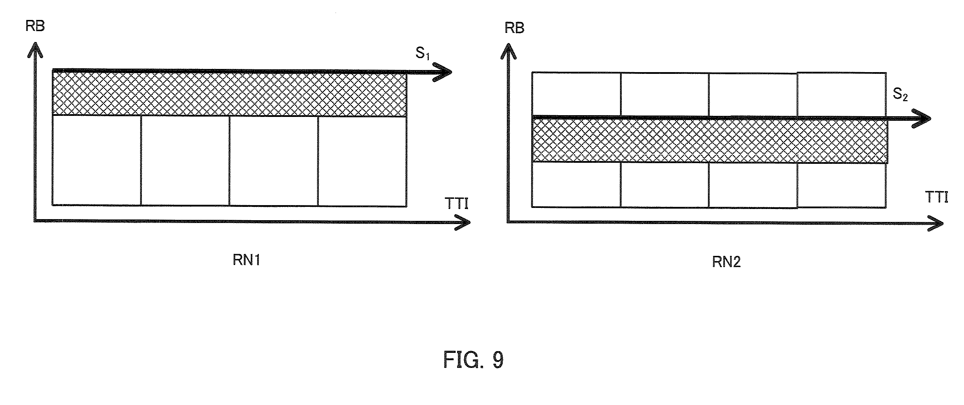

FIG. 9 is a diagram to explain the relay transmission method according to the second aspect of the invention. In addition, FIG. 9 only shows TTIs (i.e. non-backhaul subframes) that enable the relay station RN to transmit data to the relay terminal RUE in one radio frame.
In FIG. 9, the radio resources over a plurality of TTIs to the relay terminal RUE are allocated to a contiguous frequency region starting from a predetermined start position. More specifically, an ith relay station RN assigns $M_n$ resource blocks contiguous from a start position $S_i$ in the frequency domain over $L_{nb}$ TTIs in an nth radio frame.
Herein, the start position $S_i$ may be a fixed value or a random value. Further, the start position $S_i$ may be varied based on radio quality reported from the relay terminal RUE. For example, by varying the start position $S_i$ based on the radio quality so that a frequency region of good radio quality is assigned to the relay terminal RUE, it is possible to improve throughput of the relay terminal RUE.
Further, the start position $S_i$ may be set to vary with each relay station RN. For example, in FIG 9, it is assumed that $M_n$ in the nth radio frame of the relay station RN 1 is "20", $S_i$ is "1", and that $L_{nb}$ is "4". In such a case, the relay station RN 1 assigns resource blocks of resource block numbers 1 to 20 over $L_{nb}$ TTIs to the relay terminal RUE (i.e. assigns 20*4=80 resource blocks). Meanwhile, the relay station RN 2 applies $S_2$ different from $S_1$. In this way, in the case of using different start positions $S_i$ for each relay station RN, since different frequency regions for each relay station RN are assigned to the relay terminal RUE, it is possible to prevent interference among relay station RNs from occurring.

<Third aspect>

In a relay transmission method according to the third aspect, when radio resources to a relay terminal RUE are allocated to a certain frequency region over a plurality of TTIs as described above, the radio resources over a plurality of TTIs may be divided and allocated to different frequency regions.

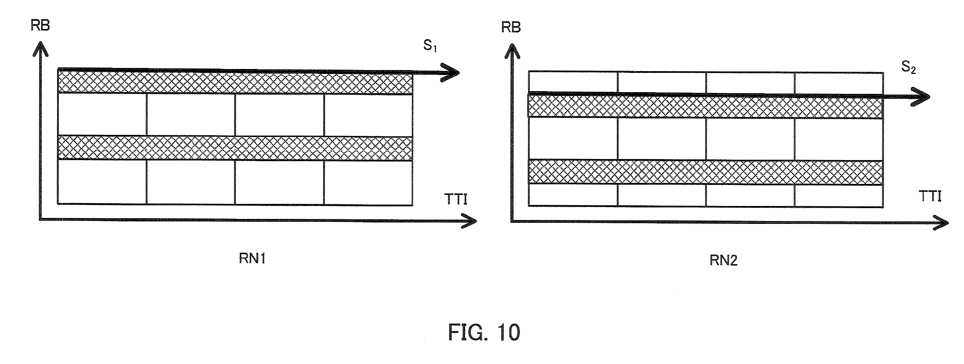

FIG. 10 is a diagram to explain the relay transmission method according to the third aspect of the invention. In addition, FIG. 10 only shows TTIs (i.e. non-backhaul subframes) that enable the relay station RN to transmit data to the relay terminal RUE in one radio frame.
In FIG. 10, the radio resources over a plurality of TTIs to the relay terminal RUE are divided and allocated to different frequency regions. More specifically, an ith relay station RN assigns $M_n$ resource blocks divided in the frequency domain with reference to a start position $S_i$ in the frequency domain in an nth radio frame. In addition, FIG. 10 illustrates the example of dividing to two frequency regions, but the radio resources may be divided to three frequency regions or more.

Herein, the start position $S_i$ may be a fixed value or a random value. Further, the start position $S_i$ may be varied based on radio quality reported from the relay terminal RUE. Furthermore, the start position $S_i$ may be set to vary with each relay station RN.

For example, in FIG. 10, it is assumed that $M_n$ in the nth radio frame of the relay station RN 1 is"20", $S_i$ is "1", and that $L_{nb}$ is "4". In such a case, the relay station RN 1 assigns resource blocks of resource block numbers 1 to 10 and resource blocks of resource block numbers 40 to 50 over $L_{nb}$ TTIs to the relay terminal RUE (i.e. assigns 20*4=80 resource blocks). In this way, by dividing radio resources assigned to the relay terminal RUE in the frequency domain, even when the radio quality of a particular frequency deteriorates, it is possible to prevent throughput of the relay terminal RUE from extremely deteriorating. In other words, it is possible to expect the frequency diversity effect.

In the above-mentioned description, the relay transmission methods according to the invention are described. In addition, in FIGs. 5 to 10, for convenience in description, it is shown that a plurality of TTIs to which the radio resources to the relay terminal RUE are allocated is contiguous. However, in the present invention, a plurality of TTIs to which the radio resources to the relay terminal RUE are allocated does not need to be contiguous, and it is essential only that the TTIs are TTIs (i.e. non-backhaul subframes) for enabling the relay station RN to transmit data to the relay terminal RUE in one radio frame.

An Embodiment of the invention will specifically be described below with reference to accompanying drawings.

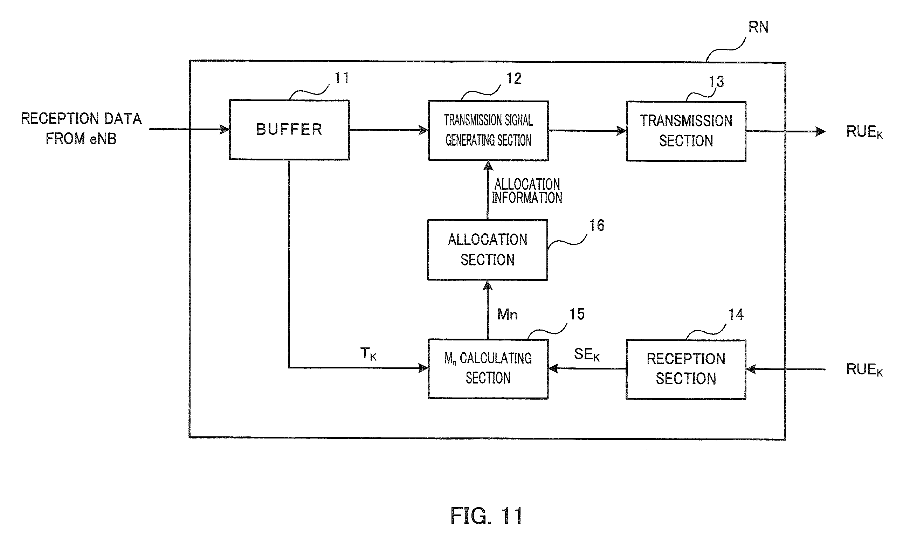

FIG. 11 is a block diagram illustrating a functional configuration of the relay station RN (Relay Node) according to one Embodiment of the invention. The relay station RN has hardware including an antenna, communication interface, processor, memory, transmission/reception circuits and the like, and the memory stores software modules executed by the processor. In addition, the functional configuration described later may be actualized by the above-mentioned hardware, may be actualized by software modules executed by the processor, or may be actualized by combination of the hardware and modules.

As shown in FIG. 11, the relay station RN is provided with a buffer 11, transmission signal generating section 12, transmission section 13, reception section 14, $M_n$ calculating section 15, and allocation section 16.

The buffer 11 (storage section) stores data to each relay terminal RUE from the radio base station eNB. Further, the buffer 11 measures a data amount $T_K$ to each relay terminal RUE, and outputs the measured $T_K$ to the $M_n$ calculating section 15, described later.

Based on allocation information (described later) from the allocation section 16, the transmission signal generating section 12 allocates radio resources assigned to the relay terminal RUE to the data stored in the buffer 11 (i.e. performs scheduling). More specifically, the transmission signal generating section 12 allocates at least one of $M_n \cdot L_{nb}$ resource blocks (see FIGs. 7 to 10) assigned as described above to the data stored in the buffer 11.

Further, based on the allocated radio resources, the transmission signal generating section 12 performs coding processing and modulation processing on the data to each relay terminal RUE, and generates a transmission signal to each relay terminal RUE. The transmission signal generating section 12 outputs the generated transmission signal to the transmission section 13.

The transmission section 13 (transmission section) transmits the transmission signal input from the transmission signal generating section 12 to each relay terminal RUE via an access link, using the allocated radio resources.

The reception section 14 receives radio quality of the transmission signal, which is transmitted from the reception section 15, from each relay terminal RUE. Herein, as the radio quality, for example, the CQI and SINR (Signal to noise interference ratio) are used. The reception section 14 calculates $SE_K$ based on the reception quality of each relay terminal RUE. Herein, as described above, $SE_K$ is a data amount allowed to transmit to a Kth relay terminal RUE with one resource block. The reception section 14 outputs the calculated $SE_K$ to the $M_n$ calculating section 15, described later.

The $M_n$ calculating section 15 (calculation section) calculates $M_n$ based on $T_k$ input from the buffer 11 and $SE_K$ input from the reception section 14. Herein, as described above, $M_n$ is the number of resource blocks in the frequency domain constituting the frequency region assigned to the relay terminal RUE in the nth radio frame. More specifically, the $M_n$ calculating section 15 calculates $M_n$ using abovementioned equation (1), in starting the nth radio frame, and outputs the calculated $M_n$ to the allocation section 16.

Further, the $M_n$ calculating section 15 may update $M_n$ based on the number $R_{n-1}$ of resource blocks that are actually used in the previous radio frame. More specifically, the $M_n$ calculating section 15 determines whether or not all $M_{n-1} \cdot L_{nb}$ resource blocks assigned to the relay terminal RUE are actually used in the previous radio frame (n-1th radio frame). In the case that all of the assigned $M_{n-1} \cdot L_{nb}$ resource blocks are actually used in the previous radio frame (i.e. in the case of $\Delta_{n-1}=0$), as described above, the $M_n$ calculating section 15 updates $M_n$ to a higher value. Meanwhile, in the case that the substantially higher number of resource blocks than the predetermined number (e.g. $\alpha \cdot L_{nb}$) are not used among $M_{n-1} \cdot L_{nb}$ resource blocks assigned in the previous radio frame (i.e. in the case of meeting above-mentioned equation (3)), as described above, the $M_n$ calculating section 15 updates $M_n$ to a lower value.

In addition, $M_n$ may be a beforehand defined fixed value. In this case, the relay station RN may be not provided

with the $M_n$ calculating section 15.

The allocation section 16 (allocation section) allocates radio resources to the relay terminal RUE to a certain frequency region over a plurality of TTIs. More specifically, the allocation section 16 assigns $M_n$ resource blocks in the frequency domain over $L_{nb}$ TTIs to the relay terminal RUE. In other words, the allocation section 16 assigns $M_n \cdot L_{nb}$ resource blocks to the relay terminal RUE (see FIGs. 7 to 10). Further, the allocation section 16 outputs allocation information, which is information of the resource blocks for the relay terminal RUE, to the transmission signal generating section 12.

In addition, $M_n$ used in the allocation section 16 may be input from the $M_n$ calculating section 15, or may be a beforehand defined fixed value. As described above, $L_{nb}$ is the number of TTIs (i.e. the number of non-backhaul subframes) for enabling the relay station RN to transmit data to the relay terminal RUE in one radio frame.

Further, in allocating radio resources to the relay terminal RUE to a certain frequency region over a plurality of TTIs, the allocation section 16 may allocate the radio resources over a plurality of TTIs to a contiguous frequency region starting from a predetermined start position. More specifically, as shown in FIG. 9, the allocation section 16 assigns $M_n$ resource blocks contiguous in the frequency domain from a start position $S_i$ over $L_{nb}$ TTIs in the nth radio frame.

Furthermore, in allocating radio resources to the relay terminal RUE to a certain frequency region over a plurality of TTIs, the allocation section 16 may divide and allocate the radio resources over a plurality of TTIs to different frequency regions. More specifically, as shown in FIG. 10, the allocation section 16 assigns $M_n$ resource blocks divided in the frequency domain with reference to the start position $S_i$ in the frequency domain in the nth radio frame.

In addition, the start position $S_i$ used by the allocation section 16 may be a fixed value, or may be a random value. Further, the start position $S_i$ may be varied based on the radio quality reported from the relay terminal RUE. Furthermore, the start position $S_i$ may be set to vary with each relay station RN.

According to the relay station RN according to one Embodiment of the invention, radio resources to the relay terminal RUE are allocated to a certain frequency region over a plurality of TTIs. Accordingly, as shown in FIG. 6B, since the transmission state of the relay station RN is maintained, ICI in the macro terminal MUE is approximately constant. In this case, even when the macro terminal MUE undergoes the effect of ICI from the relay station RN, a time error of the radio quality of the macro terminal MUE is low. As a result, it is possible to prevent throughput of the macro terminal MUE from deteriorating due to the time error of the radio quality of the macro terminal MUE.

The Embodiment disclosed this time is illustrative in all the respects, and the invention is not limited to the Embodiment. The scope of the invention is indicated by the scope of the claims rather than by the description of only the above-mentioned Embodiment, and is intended to include senses equal to the scope of the claims and all modifications within the scope of the claims.

The present application is based on Japanese Patent Application No. 2010-225181 filed on October 4, 2010, entire content of which is expressly incorporated by reference herein.

## Claims

1.   A relay transmission method comprising:

in a relay station,
receiving data to a relay terminal from a radio base station via a backhaul link;
allocating a radio resource to the relay terminal to a certain frequency region over a plurality of transmission time intervals; and
transmitting the data to the relay terminal via an access link using the allocated radio resource.

2.   The relay transmission method according to claim 1, wherein the certain frequency region over the plurality of transmission time intervals is comprised of at least one resource block, and the number ($M_n$) of resource blocks in the frequency domain is obtained by following equation (1):
[Eq.1]

$$M_n = (1+p) \sum_{k=1}^{K} \frac{T_k}{SE_k \cdot L_{nb}} \qquad \text{equation (1)}$$

where K represents the number of relay terminals connecting to the relay station, $T_K$ represents an amount of data to a Kth relay terminal, $SE_K$ represents an amount of data that the relay station is capable of transmitting to the Kth relay terminal with one resource block, $L_{nb}$ represents the number of transmission time intervals for enabling the relay station to transmit the data in one radio frame, and p represents a predetermined coefficient.

3. The relay transmission method according to claim 2, wherein the number of resource blocks in the frequency domain is updated based on the number of resource blocks that are actually used in a previous radio frame.

4. The relay transmission method according to any one of claims 1 to 3, wherein the radio resource over the plurality of transmission time intervals are allocated to a contiguous frequency region starting from a predetermined start position.

5. The relay transmission method according to claim 1, wherein the radio resource over the plurality of transmission time intervals are divided and allocated to different frequency regions.

6. A relay station comprising:

   a storage section configured to store data to a relay terminal received from a radio base station via a backhaul link; an allocation section configured to allocate a radio resource to the relay terminal to a certain frequency region over a plurality of transmission time intervals; and a transmission section configured to transmit the data to the relay terminal via an access link using the allocated radio resource.

7. The relay station according to claim 6, wherein the certain frequency region over the plurality of transmission time intervals is comprised of at least one resource block, and the relay station further has a calculation section configured to calculate the number ($M_n$) of resource blocks in the frequency domain by following equation (1):
   [Eq.1]

$$M_n = (1 + p) \sum_{k=1}^{K} \frac{T_k}{SE_k \cdot L_{nb}} \qquad \text{equation (1)}$$

   where K represents the number of relay terminals connecting to the relay station, $T_K$ represents an amount of data to a Kth relay terminal, $SE_K$ represents an amount of data that the relay station is capable of transmitting to the Kth relay terminal with one resource block, $L_{nb}$ represents the number of transmission time intervals for enabling the relay station to transmit the data in one radio frame, and p represents a predetermined coefficient.

8. The relay station according to claim 7, wherein the calculation section is configured to update the number of resource blocks in the frequency domain based on the number of resource blocks that are actually used in a previous radio frame.

9. The relay station according to any one of claims 6 to 8, wherein the allocation section is configured to allocate the radio resource over the plurality of transmission time intervals to a contiguous frequency region starting from a predetermined start position.

10. The relay station according to claim 6, wherein the allocation section is configured to divide and allocate the radio resource over the plurality of transmission time intervals to different frequency regions.

BACKHAUL LINK (Un)    ACCESS LINK (Uu)

f1    f1

eNB    RN    UE

A    B

FIG. 1

eNB TRANSMISSION
(RELAY RECEPTION)

f1

TTI

f1

t

RELAY TRANSMISSION
(UE RECEPTION)

FIG. 2

FIG. 3

FIG. 4B

FIG. 4A

RB

RUE RUE

TTI

FIG. 5A

RB

RUE RUE RUE RUE RUE RUE

M USED
RBs

VACANT
RBs

TOTAL $M_0$ RBs

TTI

FIG. 5B

RB

RB1 | RUE 1 | RUE 2 | | |
RB2 | RUE 1 | RUE 2 | | |

TTI

RB1 ICI OF MUE

RB2 ICI OF MUE

**FIG. 6A**

RB

| RUE 1 | RUE 1 | RUE 2 | RUE 2 |
| | | | |

TTI

RB1 ICI OF MUE

RB2 ICI OF MUE

**FIG. 6B**

FIG. 7

FIG. 8

FIG. 9

EP 2 627 114 A1

RB

$S_1$

TTI

RN1

RB

$S_2$

TTI

RN2

FIG. 10

RECEPTION DATA
FROM eNB

BUFFER — 11

TRANSMISSION SIGNAL
GENERATING SECTION — 12

TRANSMISSION
SECTION — 13 → $RUE_K$

ALLOCATION
INFORMATION

ALLOCATION
SECTION — 16

$M_n$

$M_n$ CALCULATING
SECTION — 15

$T_K$

$SE_K$

RECEPTION
SECTION — 14 ← $RUE_K$

RN

FIG. 11

EP 2 627 114 A1

| | | |
|---|---|---|
| **INTERNATIONAL SEARCH REPORT** | International application No. | |
| | PCT/JP2011/072758 | |

**A. CLASSIFICATION OF SUBJECT MATTER**
*H04W16/26(2009.01)i, H04B7/15(2006.01)i, H04W72/04(2009.01)i*

According to International Patent Classification (IPC) or to both national classification and IPC

**B. FIELDS SEARCHED**

Minimum documentation searched (classification system followed by classification symbols)
H04W16/26, H04B7/15, H04W72/04

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2009-302642 A (Toshiba Corp.), 24 December 2009 (24.12.2009), paragraphs [0011] to [0028], [0041] to [0047] (Family: none) | 1-10 |
| Y | JP 2010-161620 A (Mitsubishi Electric Corp.), 22 July 2010 (22.07.2010), paragraphs [0040] to [0055] (Family: none) | 1-10 |
| A | JP 2009-510891 A (LG Electronics Inc.), 12 March 2009 (12.03.2009), abstract & US 2007/0070953 A1 & EP 1929659 A & WO 2007/037635 A2 & KR 10-2008-0059408 A & CA 2623187 A | 1-10 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 November, 2011 (10.11.11) | 22 November, 2011 (22.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 627 114 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010225181 A